# FASCICULE DE BREVET EUROPEEN

(11) **EP 3 483 063 B1**
(45) Date de publication et mention de la délivrance du brevet: **25.11.2020**
(21) Numéro de dépôt: 18203861.2
(22) Date de dépôt: 31.10.2018
(51) Int. Cl.: B64C 25/42

(54) **ARCHITECTURE DE SYSTEME DE FREINAGE POUR AERONEF**
AUFBAU EINES BREMSSYSTEMS FÜR EIN LUFTFAHRZEUG
ARCHITECTURE OF AN AIRCRAFT BRAKING SYSTEM

(30) Priorité: 08.11.2017 FR 1760491
(43) Date de publication de la demande: 15.05.2019
(73) Titulaire: Safran Landing Systems, 78140 Vélizy-Villacoublay (FR)
(72) Inventeur: GOYEZ, Brian, 78140 VELIZY-VILLACOUBLAY (FR); BONIGEN, François, 78140 VELIZY-VILLACOUBLAY (FR); FREY, Olivier, 78140 VELIZY-VILLACOUBLAY (FR)
(74) Mandataire: Lavaud, Thomas

(56) Documents cités:
- EP-A1- 3 176 083
- US-A- 6 003 640
- US-A1- 2013 253 736

## Description

L'invention concerne le domaine des architectures de système de freinage pour aéronef.

### ARRIERE PLAN DE L'INVENTION

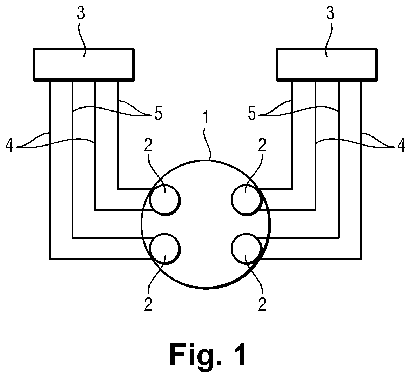

En référence à la figure 1, une architecture centralisée connue de système de freinage électrique d'aéronef comprend une pluralité de freins 1 destinés chacun à freiner une roue d'un atterrisseur de l'aéronef.

Chaque frein 1 comporte quatre actionneurs électromécaniques de freinage 2 qui sont regroupés en deux groupes distincts de deux actionneurs électromécaniques 2.

Les deux actionneurs électromécaniques 2 de chaque groupe distinct sont connectés à un même calculateur 3 situé dans le fuselage de l'aéronef, en haut de l'atterrisseur.

Le moteur électrique de chaque actionneur électromécanique 2 reçoit un courant électrique triphasé d'alimentation du calculateur 3 auquel l'actionneur électromécanique 2 est connecté, et chaque actionneur électromécanique 2 transmet des mesures d'un paramètre d'asservissement au calculateur 3, par exemple des mesures de position angulaire du rotor du moteur électrique. Les calculateurs 3 mettent en œuvre des fonctions de contrôle et de commande des actionneurs électromécaniques 2, ainsi que des fonctions de génération de puissance qui utilisent des onduleurs.

On constate que cette architecture centralisée nécessite l'utilisation de dix fils électriques au moins par actionneur électromécanique 2 : trois fils d'alimentation 4 pour les trois phases du moteur électrique, quatre fils de communication 5 pour remonter à un calculateur centralisé 3 les mesures de position angulaire du rotor du moteur électrique, ainsi que deux fils d'alimentation (non représentés sur la figure 1) pour piloter un organe de blocage de l'actionneur électromécanique 2 permettant de mettre en œuvre un freinage de parc.

Ces fils électriques sont intégrés dans des harnais qui cheminent depuis le fuselage de l'aéronef vers le frein 1 et qui sont donc encombrants et pesants. La longueur importante des harnais dans lesquels cheminent les fils d'alimentation 4 (et donc les courants d'alimentation des moteurs électriques) impose d'intégrer dans les calculateurs 3 des circuits de filtrage des courants de mode commun. Les circuits de filtrage augmentent la masse, la complexité et le coût des calculateurs 3 et donc du système de freinage.

Le document EP 3 176 083 A1 décrit une architecture comprenant un réseau numérique comportant des modules de communication numérique intégrés dans les actionneurs de freinage et un organe d'interconnexion réseau. De plus, elle comporte un frein, deux unités de commande, deux unités d'alimentation fournissant de tension d'alimentation aux actionneurs, et un boîtier de connexion positionné sur le porte-actionneurs du frein.

### OBJET DE L'INVENTION

L'invention a pour objet de réduire l'encombrement, la masse, la complexité et le coût d'un système de freinage.

### RESUME DE L'INVENTION

En vue de la réalisation de ce but, on propose une architecture de système de freinage pour aéronef, comportant :
- un frein destiné à freiner une roue d'un atterrisseur de l'aéronef, le frein comportant des organes de friction et des actionneurs électromécaniques pour appliquer un effort de freinage sur les organes de friction et exercer ainsi un couple de freinage sur la roue, chaque actionneur électromécanique comprenant un moteur électrique et un module de puissance ;
- un calculateur situé dans un fuselage de l'aéronef et agencé pour produire des signaux numériques de pilotage ;
- une unité de puissance située dans le fuselage de l'aéronef et agencée pour produire une puissance électrique d'alimentation permettant d'alimenter les moteurs électriques ;
- un boîtier de jonction situé sur l'atterrisseur, le boîtier de jonction étant connecté au calculateur, à l'unité de puissance et aux actionneurs électromécaniques, le boîtier de jonction étant agencé pour recevoir et distribuer la puissance électrique d'alimentation aux actionneurs électromécaniques, le boîtier de jonction comportant un module électrique de contrôle de moteur qui produit des signaux numériques de commande de moteur à partir des signaux numériques de pilotage, le boîtier de jonction comportant de plus un module électrique de conversion qui convertit les signaux numériques de commande de moteur en signaux analogiques de commande de moteur à destination des modules de puissance des actionneurs électromécaniques.

L'utilisation du boîtier de jonction permet de mutualiser la génération des signaux analogiques de commande de moteur, et donc de réduire le nombre de câbles circulant depuis le fuselage de l'aéronef vers le frein. On réduit par ailleurs le nombre de composants pour mettre en œuvre des fonctions qui peuvent être mutualisées dans le boîtier de jonction, et donc on réduit la masse et la complexité du système de freinage, et on améliore sa fiabilité.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :
- la figure 1 représente une architecture de système de freinage de l'art antérieur ;
- la figure 2 représente une architecture de système de freinage selon un premier mode de réalisation de l'invention ;
- la figure 3 représente une architecture de système de freinage selon un deuxième mode de réalisation de l'invention.

### DESCRIPTION DETAILLEE DE L'INVENTION

L'invention est ici mise en œuvre sur un aéronef qui comporte une pluralité d'atterrisseurs principaux portant chacun une pluralité de roues dites « freinées », c'est à dire une pluralité de roues équipées chacune d'un frein pour freiner l'aéronef. La présente description porte sur une unique roue freinée, mais l'invention s'applique bien sûr de la même manière à tout ou partie des roues freinées de l'aéronef.

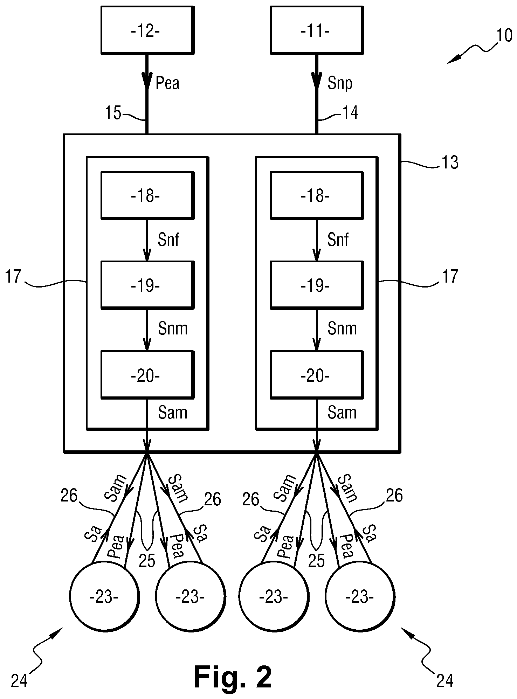

En référence à la figure 2, une architecture de système de freinage pour aéronef selon un premier mode de réalisation de l'invention 10 comporte un calculateur 11, une unité de puissance 12, un boîtier de jonction 13 et un frein d'une roue d'un atterrisseur principal.

Le calculateur 11, intégré dans un réseau avionique de l'aéronef, est positionné dans une baie située dans le fuselage de l'aéronef. Le calculateur 11 appartient ici à l'ensemble de systèmes de l'ATA42 (Avionique Modulaire Intégrée).

Le calculateur 11 acquiert un ordre de freinage, généré par exemple par un pilote de l'aéronef ou par un système de freinage automatique, et transforme l'ordre de freinage en signaux numériques de pilotage Snp. Les signaux numériques de pilotage Snp comprennent une consigne de freinage.

L'unité de puissance 12 est ici un bus de puissance transportant une puissance électrique provenant d'un générateur d'énergie électrique de l'aéronef ou de moyens de stockage d'énergie électrique de l'aéronef, ou bien un boîtier de conversion de puissance relié au bus de puissance. Un tel boîtier de conversion de puissance est aussi parfois appelé PSU, pour *Power Supply Unit.*

L'unité de puissance 12 produit une puissance électrique d'alimentation Pea.

Le boîtier de jonction 13 est situé sur l'atterrisseur principal. Le boîtier de jonction 13 peut être situé sur toute partie de l'atterrisseur principal : sur une jambe, sur un essieu, à l'intérieur de l'essieu, sur le frein lui-même, etc.

Le boîtier de jonction 13 est connecté au calculateur 11 via un bus numérique 14, et à l'unité de puissance 12 via un câble de puissance 15. Le bus numérique 14 est par exemple un bus AFDX ou un bus µAFDX.

Le bus numérique 14 et le câble de puissance 15 cheminent depuis le fuselage de l'aéronef jusqu'au boîtier de jonction 13 via l'atterrisseur principal.

Le boîtier de jonction 13 comporte tout d'abord des composants de distribution (non représentés). Les composants de distribution sont reliés au câble de puissance 15, et sont agencés pour recevoir et pour distribuer la puissance électrique d'alimentation Pea vers le frein.

Le boîtier de jonction 13 comporte de plus deux voies de commande 17 distinctes, sans aucune interaction électrique entre elles, et dissimilaires.

Par « dissimilaires », on entend ici que chaque voie de commande 17 comporte, pour réaliser une même fonction, un composant électrique complexe différent. Le terme « complexe » est défini dans les normes permettant de satisfaire aux exigences de certification des aéronefs (par exemple, la norme DO-254 ou la norme DO-178). Le composant électrique complexe est par exemple un FPGA ou un ASIC. La dissimilarité permet d'éviter qu'une panne de mode commun du composant électrique complexe ne puisse conduire à la perte totale du freinage de la roue.

Chaque voie de commande 17 comporte ici un module électrique de contrôle de freinage 18, un module électrique de contrôle de moteur 19 et un module électrique de conversion 20. Le module électrique de contrôle de freinage 18 est positionné en amont du module électrique de contrôle de moteur 19, qui est positionné en amont du module électrique de conversion 20. Par « en amont », on entend du côté de la provenance de l'ordre de freinage, et non du côté du frein.

Dans chaque voie de commande 17, le module électrique de contrôle de freinage 18 reçoit la consigne de freinage du calculateur 11 via le bus numérique 14, et met en œuvre des lois de commande de freinage de haut niveau pour produire des signaux numériques de commande de freinage Snf.

Le module électrique de contrôle de moteur 19 acquiert les signaux numériques de commande de freinage Snf, et met en œuvre des boucles d'asservissement de pilotage de moteur pour produire des signaux numériques de commande de moteur Snm. Les signaux numériques de commande de moteur Snm sont ainsi produits à partir des signaux numériques de commande de freinage Snf et donc à partir des signaux numériques de pilotage Snp comprenant la consigne de freinage.

Le module électrique de conversion 20 comprend un convertisseur numérique-analogique. Le module électrique de conversion 20 acquiert les signaux numériques de commande de moteur Snm et convertit les signaux numériques de commande de moteur Snm en signaux analogiques de commande de moteur Sam. Les signaux analogiques de commande de moteur Sam comprennent des signaux analogiques de commande d'onduleurs qui sont, par exemple, des signaux de modulation de largeur d'impulsion.

On note que le boîtier de jonction 13 échange aussi des informations avec le calculateur 11 sur le bus numérique 14.

Le frein, quant à lui, est destiné à freiner la roue de l'aéronef. Le frein comporte un porte-actionneurs sur lequel sont montés quatre actionneurs électromécaniques 23, et des organes de friction, en l'occurrence une pile de disques de carbone.

Les quatre actionneurs électromécaniques 23 sont utilisés pour appliquer un effort de freinage sur la pile de disques de carbone et exercer ainsi un couple de freinage sur la roue qui ralentit la rotation de la roue et donc freine l'aéronef lorsque celui-ci est au sol.

Chaque actionneur électromécanique 23 comporte un corps fixé au porte-actionneurs et un poussoir.

Un module de puissance, un moteur électrique et un module mécanique sont intégrés à l'intérieur du corps de l'actionneur électromécanique 23.

Le module de puissance comporte des composants électriques réalisant une conversion de puissance continue en puissance alternative, notamment des onduleurs, et des composants électriques de filtrage. Le module de puissance génère des courants électriques triphasés circulant dans des enroulements d'un stator du moteur électrique. Le module mécanique transforme un mouvement de rotation d'un arbre de sortie du moteur électrique en un mouvement linéaire du poussoir.

Le poussoir est actionné par le moteur électrique, via le module mécanique, pour coulisser et appliquer l'effort de freinage sur la pile de disques de carbone.

Chaque actionneur électromécanique 23 comporte de plus un organe de blocage permettant de mettre en œuvre un freinage de parc. L'organe de blocage est agencé pour maintenir l'arbre de sortie du moteur électrique dans une position donnée, de manière à bloquer en position le poussoir.

L'actionneur électromécanique 23 comporte en outre des capteurs qui réalisent des mesures de paramètres de fonctionnement de l'actionneur électromécanique 23. Les mesures réalisées comprennent des mesures de courant et/ou des mesures de tension et/ou des mesures de position angulaire d'un rotor du moteur électrique.

Les quatre actionneurs électromécaniques 23 du frein sont répartis en deux groupes d'actionneurs électromécaniques 24 distincts. Chaque voie de commande 17 est agencée pour commander l'un des deux groupes d'actionneurs électromécaniques 24. Ainsi, la perte d'une voie de commande 17, causée par exemple par une panne d'un composant électrique du module électrique de contrôle de freinage 18, du module électrique de contrôle de moteur 19 ou du module électrique de conversion 20 de ladite voie de commande 17, ne peut aboutir qu'à la perte de la moitié du freinage de la roue.

Chaque actionneur électromécanique 23 est relié au boîtier de jonction 13 par un câble de puissance 25 sur lequel chemine la puissance électrique d'alimentation Pea, et par un câble de commande 26 sur lequel cheminent les signaux analogiques de commande de moteur Sam.

Les câbles de commande 26 de deux actionneurs électromécaniques 23 d'un même groupe d'actionneurs électromécaniques 24 sont connectés à un module électrique de conversion 20 d'une même voie de commande 17.

Le module de puissance de chaque actionneur électromécanique 23 reçoit la puissance électrique d'alimentation Pea et les signaux analogiques de commande de moteur Sam. La puissance électrique d'alimentation Pea alimente les onduleurs du module de puissance, qui sont pilotés par les signaux analogiques de commande de moteur Sam. Le module de puissance génère alors les courants électriques triphasés à destination du stator du moteur électrique.

Les actionneurs électromécaniques 23 sont agencés pour transmettre des signaux analogiques montants Sa au boîtier de jonction 13 via les câbles de commande 26. Les signaux analogiques montants Sa comprennent les mesures réalisées par les capteurs des actionneurs électromécaniques 23. Les signaux analogiques montants Sa permettent notamment au module électrique de commande de freinage 18 et au module électrique de commande de moteur 19 de chaque voie de commande 17 de mettre en œuvre respectivement les lois de commande de freinage de haut niveau et les boucles d'asservissement de pilotage de moteur.

On note que l'un des avantages de l'architecture 10 qui vient d'être présentée concerne le problème de la dissimilarité. Ici, le contrôle de freinage et le contrôle de moteur sont réalisés dans le boîtier de jonction 13. Ces fonctions numériques nécessitent un ou plusieurs composants électriques complexes, dont l'utilisation requiert une dissimilarité (c'est à dire deux voies dissimilaires). Or, mettre en œuvre la dissimilarité dans le boîtier de jonction 13 ou dans le calculateur 11 est beaucoup plus simple que de la mettre en œuvre, par exemple, dans un actionneur électromécanique 23 à l'intérieur duquel seraient réalisés le contrôle de moteur et/ou le contrôle de freinage. En effet, mettre en œuvre une dissimilarité dans un actionneur électromécanique 23 reviendrait à complexifier de manière importante l'actionneur électromécanique 23. On augmente en effet le nombre de composants électriques à l'intérieur de l'actionneur électromécanique 23, son volume, sa masse, son coût, on fait face à une gestion complexe des interactions entre les deux voies, etc.

On note aussi que le boîtier de jonction 13 est classiquement présent dans les architectures de système de freinage traditionnelles. Le rôle habituel du boîtier de jonction 13 est de distribuer vers chaque actionneur électromécanique 23 le câblage qui provient d'un harnais longeant la jambe de l'atterrisseur, pour fournir aux actionneurs électromécaniques 23 la puissance électrique d'alimentation Pea. Dans l'invention, on munit donc le boîtier de jonction 13 existant de fonctions nouvelles et innovantes, sans modifier de manière importante les interfaces mécaniques d'un boîtier de jonction 13 existant.

Ainsi, par rapport à l'architecture de la figure 1, on supprime le calculateur centralisé 3 sans ajouter d'équipement ou de LRU (pour *Line Replaceable Unit*) supplémentaire.

On simplifie et on réduit donc les coûts de l'intégration de l'architecture de système de freinage pour aéronef.

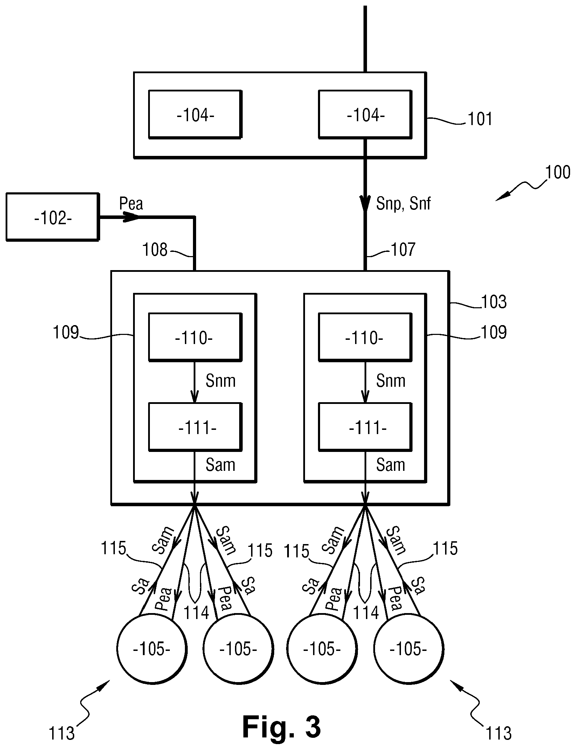

En référence à la figure 3, une architecture de système de freinage pour aéronef selon un deuxième mode de réalisation de l'invention 100 comporte un calculateur 101, une unité de puissance 102, un boîtier de jonction 103 et un frein d'une roue d'un atterrisseur principal.

Le calculateur 101 est à nouveau intégré dans un réseau avionique de l'aéronef et positionné dans une baie située dans le fuselage de l'aéronef.

Le calculateur 101 comporte deux modules électriques de contrôle de freinage 104. Les deux modules électriques de contrôle de freinage 104 sont distincts, sans aucune interaction électrique entre eux, et dissimilaires.

Le calculateur 101 acquiert une consigne de freinage. La consigne de freinage est générée par un calculateur de l'ATA42, non représenté ici, à partir d'un ordre de freinage lui-même généré par exemple par un pilote de l'aéronef ou par un système de freinage automatique.

Chaque module électrique de contrôle de freinage 104 reçoit la consigne de freinage, et met en œuvre des lois de commande de freinage de haut niveau pour produire des signaux numériques de commande de freinage Snf.

Le calculateur 101 produit ainsi des signaux numériques de pilotage Snp comprenant les signaux numériques de commande de freinage Snf produits par les deux modules électriques de contrôle de freinage 104.

On note que les signaux numériques de commande de freinage Snf produits par chaque module électrique de contrôle de freinage 104 permettent de commander deux actionneurs électromécaniques 105 du frein. Ainsi, la perte d'un module électrique de contrôle de freinage 104, causée par exemple par une panne d'un composant électrique dudit module électrique de contrôle de freinage 104, conduit à une perte de freinage correspondant à la moitié du freinage de la roue. On pourrait cependant prévoir que chaque module électrique de contrôle de freinage 104 puisse permettre de commander un nombre différent d'actionneurs électromécaniques 105 du frein, voire l'ensemble des actionneurs électromécaniques 105 du frein. Ainsi, la perte d'un module électrique de contrôle de freinage 104 ne conduirait à aucune perte de freinage.

L'unité de puissance 102 est semblable à celle précédemment décrite.

Le boîtier de jonction 103 est à nouveau situé sur l'atterrisseur principal.

Le boîtier de jonction 103 est connecté au calculateur 101 via un bus numérique 107, et à l'unité de puissance 102 via un câble de puissance 108.

Le boîtier de jonction 103 comporte tout d'abord des composants de distribution (non représentés). Les composants de distribution sont reliés au câble de puissance 108, et sont agencés pour recevoir et pour distribuer la puissance électrique d'alimentation Pea vers le frein.

Le boîtier de jonction 103 comporte de plus deux voies de commande 109 distinctes, sans aucune interaction électrique entre elles, et dissimilaires.

Chaque voie de commande 109 comporte ici un module électrique de contrôle de moteur 110 et un module électrique de conversion 111. Le module électrique de contrôle de moteur 110 est positionné en amont du module électrique de conversion 111.

Dans chaque voie de commande 109, le module électrique de contrôle de moteur 110 acquiert via le bus numérique 107 les signaux numériques de commande de freinage Snf provenant du calculateur 101, et met en œuvre des boucles d'asservissement de pilotage de moteur pour produire des signaux numériques de commande de moteur Snm. Les signaux numériques de commande de moteur Snm sont ainsi produits à partir des signaux numériques de commande de freinage Snf et donc à partir des signaux numériques de pilotage Snp comprenant les signaux numériques de commande de freinage Snf produits par les deux modules électriques de contrôle de freinage 104.

Le module électrique de conversion 111 comprend un convertisseur numérique-analogique. Le module électrique de conversion 111 acquiert les signaux numériques de commande de moteur Snm et convertit les signaux numériques de commande de moteur Snm en signaux analogiques de commande de moteur Sam.

On note que le boîtier de jonction 103 échange aussi des informations avec le calculateur 101 sur le bus numérique 107.

Le frein, quant à lui, est destiné à freiner la roue de l'aéronef. Le frein comporte un porte-actionneurs sur lequel sont montés quatre actionneurs électromécaniques 105, et des organes de friction, en l'occurrence une pile de disques de carbone.

Les actionneurs électromécaniques 105 sont semblables à ceux précédemment décrits.

Les quatre actionneurs électromécaniques 105 du frein sont répartis en deux groupes d'actionneurs électromécaniques 113 distincts. Chaque voie de commande 109 est agencée pour commander l'un des deux groupes d'actionneurs électromécaniques 113 distincts. Ainsi, la perte d'une voie de commande 109, causée par exemple par une panne d'un composant électrique du module électrique de contrôle de moteur 110 ou du module électrique de conversion 111, ne peut aboutir qu'à la perte de la moitié du freinage de la roue.

Chaque actionneur électromécanique 105 est relié au boîtier de jonction 103 par un câble de puissance 114 sur lequel chemine la puissance électrique d'alimentation Pea, et par un câble de commande 115 sur lequel cheminent les signaux analogiques de commande de moteur Sam.

Les câbles de commande 115 de deux actionneurs électromécaniques 105 d'un même groupe d'actionneurs électromécaniques 113 sont connectés à un module électrique de conversion 111 d'une même voie de commande 109.

Le module de puissance de chaque actionneur électromécanique 105 reçoit la puissance électrique d'alimentation Pea et les signaux analogiques de commande de moteur Sam. La puissance électrique d'alimentation Pea alimente les onduleurs du module de puissance, qui sont pilotés par les signaux analogiques de commande de moteur Sam. Le module de puissance génère alors les courants électriques triphasés à destination du stator du moteur électrique.

Les actionneurs électromécaniques 105 sont agencés pour transmettre des signaux analogiques montants Sa au boîtier de jonction 103 via les câbles de commande 115. Les signaux analogiques montants Sa comprennent les mesures réalisées par les capteurs des actionneurs électromécaniques 105.

Les signaux analogiques montants Sa permettent notamment aux modules électriques de commande de freinage 104 et aux modules électriques de commande de moteur 110 de mettre en œuvre respectivement les lois de commande de freinage de haut niveau et les boucles d'asservissement de pilotage de moteur.

On retrouve bien sûr, dans cette architecture 100, les avantages de l'architecture de système de freinage pour aéronef selon le premier mode de réalisation de l'invention 10.

L'invention n'est pas limitée aux modes de réalisation particuliers qui viennent d'être décrits, mais, bien au contraire, couvre toute variante entrant dans le cadre de l'invention tel que défini par les revendications.

On note que le calculateur d'une architecture couverte par l'invention peut gérer le freinage d'un nombre quelconque de freins des roues d'un nombre quelconque d'atterrisseurs. Il est bien sûr aussi possible d'avoir une pluralité de calculateurs pour un ou plusieurs freins des roues d'un même atterrisseur ou de plusieurs atterrisseurs. Dans le cas de l'architecture selon le deuxième mode de réalisation de l'invention, chaque calculateur peut comprendre un nombre quelconque de modules électriques de contrôle de freinage.

De même, une unité de puissance peut alimenter des moteurs électriques d'un nombre quelconque d'actionneurs électromécaniques positionnés sur un ou plusieurs freins des roues d'un ou de plusieurs atterrisseurs. Il est aussi possible d'avoir plusieurs unités de puissance pour alimenter les moteurs électriques des actionneurs électromécaniques d'un même frein.

De même, un boîtier de jonction peut être relié à un nombre quelconque d'actionneurs électromécaniques d'un ou de plusieurs freins des roues d'un atterrisseur. Un boîtier de jonction peut comprendre un nombre quelconque de voies de commande, reliées chacune à un nombre quelconque d'actionneurs électromécaniques d'un ou de plusieurs freins des roues d'un atterrisseur.

On a précisé, dans cette description, que les deux voies de commande 17, les deux modules électriques de contrôle de freinage 104 et les deux voies de commande 109 sont deux à deux distinct(e)s, sans aucune interaction électrique entre eux (elles), et dissimilaires.

Il est bien sûr possible que ces voies et modules soient entièrement doublés et dissimilaires.

Il est aussi possible que seule une partie des voies et modules soit doublée.

Ainsi, par exemple, dans l'architecture selon le premier mode de réalisation de l'invention, on peut prévoir que le module électrique de contrôle de freinage 18 soit commun aux deux voies de commande 17.

Il est aussi possible que seule une partie des voies et modules doublés soit dissimilaire.

Ainsi, par exemple, dans l'architecture selon le premier mode de réalisation de l'invention, on peut prévoir que les modules électriques de contrôle de moteur 19 ne soient pas dissimilaires, et donc que la dissimilarité provienne d'une autre partie des voies de commande.

Il est enfin possible que les voies et les modules ne soient ni doublés et/ou ni dissimilaires.

## Revendications

1. Architecture de système de freinage pour aéronef, comportant :
- un frein destiné à freiner une roue d'un atterrisseur de l'aéronef, le frein comportant des organes de friction et des actionneurs électromécaniques (23 ; 105) pour appliquer un effort de freinage sur les organes de friction et exercer ainsi un couple de freinage sur la roue, chaque actionneur électromécanique comprenant un moteur électrique et un module de puissance ;
- un calculateur (11 ; 101) apte à être situé dans un fuselage de l'aéronef et agencé pour produire des signaux numériques de pilotage (Snp) ;
- une unité de puissance (12 ; 102) apte à être située dans le fuselage de l'aéronef et agencée pour produire une puissance électrique d'alimentation (Pea) permettant d'alimenter les moteurs électriques ;
- un boîtier de jonction (13 ; 103) apte à être situé sur l'atterrisseur, le boîtier de jonction étant connecté au calculateur, à l'unité de puissance et aux actionneurs électromécaniques, le boîtier de jonction étant agencé pour recevoir et distribuer la puissance électrique d'alimentation aux actionneurs électromécaniques, le boîtier de jonction comportant un module électrique de contrôle de moteur (19 ; 110) qui produit des signaux numériques de commande de moteur (Snm) à partir des signaux numériques de pilotage (Snp), le boîtier de jonction comportant de plus un module électrique de conversion (20 ; 111) qui convertit les signaux numériques de commande de moteur (Snm) en signaux analogiques de commande de moteur (Sam) à destination des modules de puissance des actionneurs électromécaniques.

2. Architecture selon la revendication 1, dans laquelle le boîtier de jonction (13) comporte un module électrique de contrôle de freinage (18) positionné en amont du module électrique de contrôle de moteur (19), et dans laquelle les signaux numériques de pilotage comprennent une consigne de freinage.

3. Architecture selon la revendication 1, dans laquelle le calculateur (101) comporte un module électrique de contrôle de freinage (104), et dans laquelle les signaux numériques de pilotage comprennent des signaux numériques de commande de freinage (Snf).

4. Architecture selon la revendication 1, dans laquelle le boîtier de jonction comporte deux voies de commande (17 ; 109) et dans laquelle les actionneurs électromécaniques du frein de la roue sont répartis en deux groupes d'actionneurs électromécaniques (24 ; 113) distincts, chaque voie de commande comportant un module électrique de contrôle de moteur et un module électrique de conversion, chaque voie de commande étant agencée pour commander l'un des deux groupes d'actionneurs électromécaniques.

5. Architecture selon les revendications 2 et 4, dans laquelle chaque voie de commande comporte de plus un module électrique de contrôle de freinage (18).

6. Architecture selon la revendication 3, dans laquelle le calculateur (101) comporte deux modules électriques de contrôle de freinage (104) dissimilaires.

7. Architecture selon la revendication 4, dans laquelle les voies de commande sont dissimilaires.

8. Architecture selon la revendication 1, dans laquelle les actionneurs électromécaniques sont agencés pour transmettre des signaux analogiques montants (Sa) au boîtier de jonction.

9. Architecture selon la revendication 8, dans laquelle les signaux analogiques montants comprennent des mesures de courant et/ou des mesures de tension et/ou des mesures de position angulaire de rotor.

10. Architecture selon la revendication 1, dans laquelle les signaux analogiques de commande de moteur (Sam) comprennent des signaux de modulation de largeur d'impulsion.

11. Architecture selon la revendication 1, dans laquelle le boîtier de jonction (13) est connecté à au moins deux actionneurs électromécaniques de deux freins de deux roues distinctes, le boîtier de jonction produisant des signaux analogiques de commande de moteur (Sam) à destination des modules de puissance des deux actionneurs électromécaniques.

## Patentansprüche

1. Architektur eines Bremssystems für ein Luftfahrzeug, umfassend:
- eine Bremse, die dazu bestimmt ist, ein Rad eines Fahrwerks des Luftfahrzeugs zu bremsen, wobei die Bremse Reibelemente und elektromechanische Aktoren (23; 105) umfasst, um eine Bremskraft auf die Reibelemente aufzubringen und so ein Bremsmoment auf das Rad auszuüben, wobei jeder elektromechanische Aktor einen Elektromotor und ein Leistungsmodul umfasst;
- einen Rechner (11; 101), der dazu geeignet ist, sich in dem Rumpf des Luftfahrzeugs zu befinden, und der so ausgebildet ist, dass er digitale Steuersignale (Snp) erzeugt;
- eine Leistungseinheit (12; 102), die dazu geeignet ist, sich in dem Rumpf des Luftfahrzeugs zu befinden, und die so ausgebildet ist, dass sie eine elektrische Versorgungsleistung (Pea) erzeugt, die die elektrischen Motoren versorgen kann;
- einen Verteilerkasten (13; 103), der dazu geeignet ist, sich an dem Fahrwerk zu befinden, wobei der Verteilerkasten mit dem Rechner, mit der Leistungseinheit und mit den elektromechanischen Aktoren verbunden ist, wobei der Verteilerkasten so ausgebildet ist, dass er die elektrische Versorgungsleistung empfängt und an die elektromechanischen Aktoren verteilt, wobei der Verteilerkasten ein elektrisches Motorsteuerungsmodul (19; 110) umfasst, das digitale Motorsteuerungssignale (Snm) anhand der digitalen Steuersignale (Snp) erzeugt, wobei der Verteilerkasten ferner ein elektrisches Umwandlungsmodul (20; 111) umfasst, das die digitalen Motorsteuerungssignale (Snm) in analoge Motorsteuerungssignale (Sam) für die Leistungsmodule der elektromechanischen Aktoren umwandelt.

2. Architektur nach Anspruch 1, bei der der Verteilerkasten (13) ein elektrisches Bremssteuerungsmodul (18) umfasst, das stromaufwärts des elektrischen Motorsteuerungsmoduls (19) positioniert ist, und bei der die digitalen Steuersignale einen Bremssollwert umfassen.

3. Architektur nach Anspruch 1, bei der der Rechner (101) ein elektrisches Bremssteuerungsmodul (104) umfasst und bei der die digitalen Steuersignale digitale Bremssteuerungssignale (Snf) umfassen.

4. Architektur nach Anspruch 1, bei der der Verteilerkasten zwei Steuerkanäle (17; 109) umfasst und bei der die elektromechanischen Aktoren der Bremse des Rades auf zwei verschiedene Gruppen von elektromechanischen Aktoren (24; 113) verteilt sind, wobei jeder Steuerkanal ein elektrisches Motorsteuerungsmodul und ein elektrisches Umwandlungsmodul umfasst, wobei jeder Steuerkanal so ausgebildet ist, dass er eine der beiden Gruppen von elektromechanischen Aktoren steuert.

5. Architektur nach den Ansprüchen 2 und 4, bei der jeder Steuerkanal ferner ein elektrisches Bremssteuerungsmodul (18) umfasst.

6. Architektur nach Anspruch 3, bei der der Rechner (101) zwei verschiedenartige elektrische Bremssteuerungsmodule (104) umfasst.

7. Architektur nach Anspruch 4, bei der die Steuerkanäle verschiedenartig sind.

8. Architektur nach Anspruch 1, bei der die elektromechanischen Aktoren so ausgebildet sind, dass sie analoge steigende Signale (Sa) an den Verteilerkasten übertragen.

9. Architektur nach Anspruch 8, bei der die analogen steigenden Signale Strommessungen und/oder Spannungsmessungen und/oder Rotorwinkelpositionsmessungen umfassen.

10. Architektur nach Anspruch 1, bei dem die analogen Motorsteuerungssignale (Sam) Pulsweitenmodulationssignale umfassen.

11. Architektur nach Anspruch 1, bei der der Verteilerkasten (13) mit mindestens zwei elektromechanischen Aktoren zweier Bremsen zweier verschiedener Räder verbunden ist, wobei der Verteilerkasten analoge Motorsteuerungssignale (Sam) für die Leistungsmodule der beiden elektromechanischen Aktoren erzeugt.

## Claims

1. An architecture for an aircraft braking system, the architecture comprising:
- a brake for braking a wheel of an undercarriage of the aircraft, the brake comprising friction members and electromechanical actuators (23; 105) for applying a braking force to the fraction members and thereby exerting braking torque on the wheel, each electromechanical actuator comprising an electric motor and a power module;
- a computer (11; 101) adapted to be situated in a fuselage of the aircraft and arranged to produce digital control signals (Snp);
- a power unit (12; 102) adapted to be situated in the fuselage of the aircraft and arranged to produce an electrical power supply (Pea) for powering the electric motors; and
- a junction box (13; 103) adapted to be situated on the undercarriage, the junction box being connected to the computer, to the power unit, and to the electromechanical actuators, the junction box being arranged to receive the electrical power supply and to distribute it to the electromechanical actuators, the junction box including an electrical motor control module (19; 110) that produces digital motor command signals (Snm) from the digital control signals (Snp), the junction box also including an electrical converter module (20; 111) that converts the digital motor command signals (Snm) into analog motor command signals (Sam) for the power modules of the electromechanical actuators.

2. An architecture according to claim 1, wherein the junction box (13) includes an electrical braking control module (18) positioned upstream from the electrical motor control module (19), and wherein the digital control signals comprise a braking setpoint.

3. An architecture according to claim 1, wherein the computer (101) includes an electrical braking control module (104), and wherein the digital control signals comprise digital braking command signals (Snf).

4. An architecture according to claim 1, wherein the junction box includes two control channels (17; 109) and wherein the electromechanical actuators of the brake of the wheel are arranged in two distinct groups (24; 113) of electromechanical actuators, each control channel including an electrical motor control module and an electrical converter module, each control channel being arranged to control one of the two groups of electromechanical actuators.

5. An architecture according to claims 2 and 4, wherein each control channel further includes an electrical braking control module (18).

6. An architecture according to claim 3, wherein the computer (101) includes two electrical braking control modules (104) that are dissimilar.

7. An architecture according to claim 4, wherein the control channels are dissimilar.

8. An architecture according to claim 1, wherein the electromechanical actuators are arranged to transmit return analog signals (Sa) to the junction box.

9. An architecture according to claim 8, wherein the return analog signals comprise current measurements and/or voltage measurements and/or rotor angular position measurements.

10. An architecture according to claim 1, wherein the analog motor command signals (Sam) comprise pulse width modulation signals.

11. An architecture according to claim 1, wherein the junction box (13) is connected to at least two electromechanical actuators of two brakes of two distinct wheels, the junction box producing analog motor command signals (Sam) for the power modules of the two electromechanical actuators.
